# FASCICULE DE BREVET EUROPEEN

(11) **EP 2 360 381 B1**
(45) Date de publication et mention de la délivrance du brevet: **12.06.2013**
(21) Numéro de dépôt: 11154409.4
(22) Date de dépôt: 14.02.2011
(51) Int. Cl.: F16B 21/08, E04F 19/06, F16B 19/02

(54) **Elément de raccordement pour barres de seuil**
Anschlusselement für Schwellenleiste
Connection element for threshold strips

(30) Priorité: 16.02.2010 FR 1051075
(43) Date de publication de la demande: 24.08.2011
(73) Titulaire: DINAC, 38350 La Mure (FR)
(72) Inventeur: Gergonne, Michel, 01100, OYONNAX (FR); Riondet, Stéphane, 38760, VARCES (FR)
(74) Mandataire: Regimbeau

(56) Documents cités:
- DE-U1- 9 105 578
- DE-U1-202005 021 228
- US-A- 3 883 258

## Description

### Domaine de l'invention

La présente invention concerne de façon générale les barres de seuil et autres éléments de bordure de revêtements de sol et mur.

### Exposé de l'art antérieur

Les barres de seuil sont des éléments fixés au sol de locaux d'habitation, de bureau ou industriels, au niveau de jonctions de deux revêtements de sol différents ou de niveaux différents. Une barre de seuil présente un intérêt à la fois fonctionnel et esthétique. Elle assure une protection des bords de revêtements de sol adjacents et masque leurs irrégularités tout en constituant une ligne de séparation nette et droite.

D'autres éléments de bordure constituent des arrêts de bordure utilisés entre la limite d'un revêtement de sol et un mur également pour des raisons fonctionnelles et/ou esthétiques. Par exemple, quand le revêtement de sol est un parquet, il est souhaitable de laisser un jour entre la limite du parquet et le mur pour éviter des problèmes de dilatation. L'arrêt de bordure cache le jour et protège le bord de revêtement.

Des éléments de bordure sont également utilisés contre des parois, par exemple en plinthe ou en baguette de séparation de revêtements muraux.

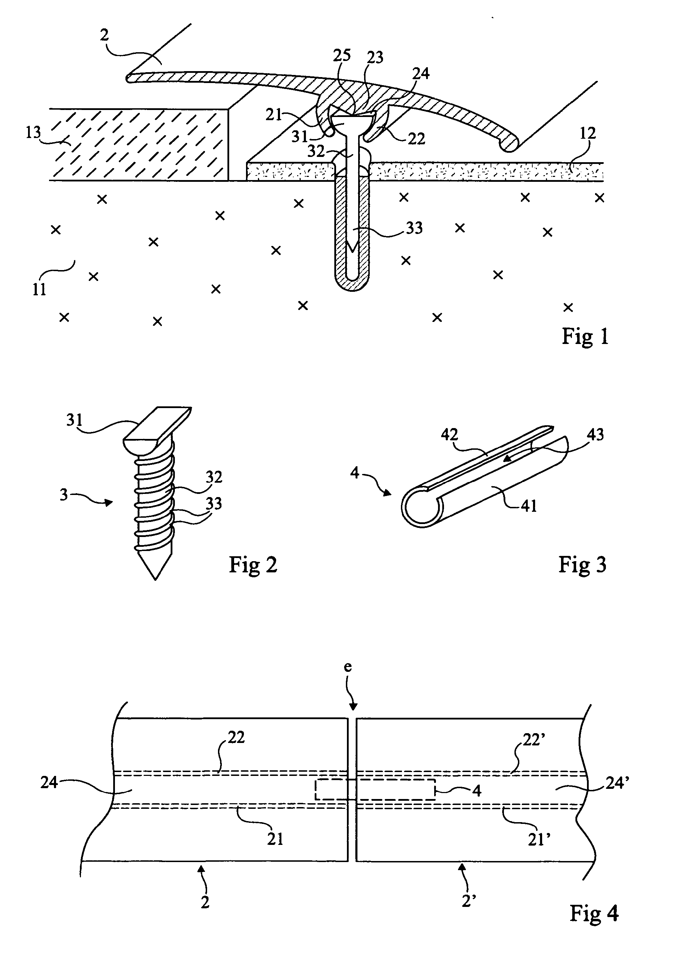

La figure 1 est une vue en coupe partielle en perspective d'une barre de seuil 2 connue, dite barre de seuil à glissière, en situation sur un sol 11 sur lequel sont déposés des revêtements de hauteur inégale, respectivement 12 et 13, par exemple une moquette et un carreau. La barre de seuil 2 a une partie supérieure apparente légèrement bombée et éventuellement elle-même peinte ou recouverte totalement ou partiellement d'un matériau pour lui donner tout aspect esthétique souhaité. La partie inférieure de la barre 2 comprend des nervures 21 et 22 en saillie définissant entre-elles et avec la partie inférieure 23 de la barre 2 une glissière longitudinale 24. Dans cette glissière peut être insérée la tête 31 d'un clou 32. Ce clou est destiné à être enfoncé dans un trou formé dans le sol 11 dans lequel a été préalablement introduit ou non une cheville 33.

La figure 2 est une vue en perspective d'un clou 3 illustrant une forme de tête de clou particulièrement bien adaptée à la glissière 24 de la barre 2. Cette tête 31 a la forme d'un demi-cylindre perpendiculaire à une tige 32 du clou et aplatie au côté opposé de cette tige. Ce demi-cylindre 31 forme un coulisseau apte à être glissé dans la glissière 24. Cette forme légèrement allongée des coulisseaux 31 permet d'éviter une rotation des têtes de clou et donc des tiges 32 de clou 3 dans un plan passant par l'axe longitudinal de la glissière. Ainsi, les tiges ne peuvent se coucher dans la glissière pendant la phase d'enfoncement. Dans l'exemple de la figure 3, le clou 3 est un "clou-cheville" en matière plastique muni d'ailettes 33 anti-arrachement, destiné à être enfoncé directement dans un trou ménagé dans le sol.

Le système des figures 1 et 2 présente un avantage de simplicité de pose. En effet, il suffit de préparer dans le sol des trous en alignement sans qu'il soit nécessaire qu'ils aient entre eux des espacements rigoureux. Un nombre de clous 3 correspondant au nombre de trous est placé dans la glissière, après quoi les clous sont mis en place par glissement en face des trous correspondants puis la barre est enfoncée, en entraînant les clous. Cet enfoncement peut se faire simplement en marchant sur la barre.

Dans l'exemple des figures 1 et 2, la partie inférieure 23 de la glissière a de préférence la forme d'un V définissant une arrête d'appui 25 (figure 1) venant appuyer sensiblement au centre de la face plane supérieure de la tête 31 du clou 3. En outre, l'espace entre les lèvres en regard des nervures 21 et 22 est supérieur au diamètre de la tige 32 du clou 3. Ainsi, une fois que le clou est mis en place, et jusqu'à son enfoncement complet, la barre de seuil peut tourner légèrement autour des têtes de clou, l'axe de rotation correspondant à l'arrête d'appui 25. Ceci permet un positionnement à une fixation pour différentes hauteurs de décalage entre les revêtements 12 et 13. Comme cela est représenté en figure 1, les parois internes, vers leurs extrémités, des nervures 21 et 22 ont une forme complémentaire de l'arrondi du coulisseau 31. L'angle du V définissant l'arrête d'appui 25 est de préférence choisi pour que, quand la barre de seuil est dans une position d'inclinaison extrême, on ait simultanément un appui de la tige du clou contre l'une des lèvres des nervures 21, 22 et de la moitié supérieure de la tête de clou contre l'un des flans du V.

Une barre de seuil telle qu'illustrée par la figure 1 est décrite dans le brevet Européen 0 588 734 de la demanderesse.

D'autres barres de seuil à glissière sont connues qui définissent, dans leur face inférieure, une glissière adaptée à une tête de clou-vis ou de clou-cheville. Par exemple, les têtes de clou pourront avoir toute forme cylindrique souhaitée, par exemple être des cylindres à section circulaire. De même, dans un mode de réalisation simple, les tiges des clous peuvent être des tiges filetées.

Les barres de seuil sont généralement formées à partir de profilés prédécoupés pour des tailles standard ou recoupés à la demande sur le lieu de pose. Dans certains cas, et notamment pour des longueurs importantes ou pour autoriser l'utilisation de chutes, on est conduit à poser bout-à-bout plusieurs barres de seuil. On profite alors généralement de la présence de la glissière pour joindre bout-à-bout deux barres de seuil au moyen d'un goupillon.

La figure 3 est une vue en perspective d'un goupillon 4 de liaison longitudinale de barres de seuil à glissière entre-elles. Ce goupillon 4 a la forme d'un cylindre ouvert longitudinalement dont le diamètre externe est adapté au diamètre interne de la glissière. Pour une tenue correcte, le goupillon est entré en force en rapprochant l'un vers l'autre les deux bords 41 et 42 de l'ouverture longitudinale 43 de façon à bénéficier d'un effet ressort une fois le goupillon 4 en place.

Un goupillon tel qu'illustré par la figure 2 est peu commode à mettre en place. Soit il est adapté à coincer correctement les barres de seuil entre-elles et est alors difficile à mettre en place (difficulté à être engagée en force). Soit il est adapté à être aisément mis en place mais alors il bloque mal les barres de seuil.

La figure 4 est une vue schématique de dessus de deux glissières 2 et 2' réunies longitudinalement au moyen d'un goupillon 4 (illustré en pointillé) engagé dans les glissières respectives 24 et 24' défini par les nervures 21, 22, respectivement 21', 22' des glissières 2 et 2'. Comme l'illustre la figure 4, la difficulté d'enfoncement du goupillon ou son défaut de tenue engendre généralement un espace "e" entre les extrémités en regard des deux glissières 2 et 2'.

De plus, il est fréquent que lors de l'enfoncement, le goupillon 4 s'enfonce plus d'un côté que de l'autre. A l'extrême, sa longueur d'enfoncement d'un des côté est insuffisante pour assurer une tenue correcte.

En outre, le goupillon est généralement métallique, donc onéreux.

Par ailleurs, le goupillon métallique étant plus rigide et plus résistant que la glissière, il a tendance lors de la pose à déformer les nervures de la glissière et sortir de celle-ci.

Il serait souhaitable de pouvoir mettre bout-à-bout des barres de seuil à glissière de façon simple, moins onéreuse et en améliorant la tenue.

Le document US 3 883 258 décrit un élément d'assemblage de forme approximativement cylindrique et comportant des ailettes en queue de sapin. L'élément d'assemblage comporte en outre une gorge de section carrée facilitant l'introduction de l'élément d'assemblage en lui permettant de se déformer.

Le document DE 91 05 578 U décrit un élément d'assemblage de section carrée et pourvu d'ailettes.

### Résumé

Un objet d'un mode de réalisation de la présente invention est de pallier tout ou partie des inconvénients des solutions connues d'assemblage bout-à-bout de barres de seuil à glissière ou autres éléments de bordure similaires.

Un autre objet d'un mode de réalisation de la présente invention est de proposer un élément d'assemblage qui améliore la tenue.

Un autre objet d'un mode de réalisation de la présente invention est de faciliter la mise en place de l'élément d'assemblage.

Un autre objet est d'améliorer la jointure et l'alignement de barres de seuil mises bout-à-bout.

Un autre objet d'un mode de réalisation de la présente invention est d'améliorer la symétrie de montage de l'élément dans les deux barres de seuil.

Pour atteindre tout ou partie de ces objets ainsi que d'autres, un mode de réalisation de la présente invention prévoit un élément en matière plastique d'assemblage bout-à-bout d'éléments de bordure de revêtement de sol ou de mur, ayant une forme allongée s'inscrivant dans une portion de cylindre, comportant des ailettes externes, et définissant, en section, une gorge en V ouverte sur un angle compris entre 90 et 170 degrés.

Selon un mode de réalisation de la présente invention, la gorge est adaptée à une forme en V saillante d'une paroi interne des éléments de bordure à assembler.

Selon un mode de réalisation de la présente invention, l'élément d'assemblage définit, en section à l'opposé de la gorge, un rail longitudinal saillant.

Selon un mode de réalisation de la présente invention, le rail est adapté à coopérer avec une ouverture définie par des nervures délimitant des glissières des éléments de bordure.

Selon un mode de réalisation de la présente invention, le diamètre dans lequel s'inscrivent lesdites ailettes est plus grand en partie centrale de l'élément qu'au voisinage de ses extrémités.

Selon un mode de réalisation de la présente invention, lesdites ailettes ont une forme biseautée vers le milieu de l'élément d'assemblage.

Selon un mode de réalisation de la présente invention, les extrémités de l'élément d'assemblage s'inscrivent dans un diamètre inférieur à celui de sa partie centrale.

Un mode de réalisation de la présente invention prévoit également un ensemble d'au moins deux éléments de bordure à glissières mises bout-à-bout, comportant un élément d'assemblage.

### Brève description des dessins

Ces objets, caractéristiques et avantages, ainsi que d'autres seront exposés en détail dans la description suivante de modes de réalisation particuliers faite à titre non-limitatif en relation avec les figures jointes parmi lesquelles :
la figure 1, décrite précédemment, représente une barre de seuil à glissière du type auquel s'applique à titre d'exemple la présente invention ;
la figure 2, décrite précédemment, représente un exemple de clou-cheville de fixation d'une barre de seuil à glissière ;
la figure 3, décrite précédemment, est une vue en perspective d'un goupillon connu d'assemblage bout-à-bout de barres de seuil à glissière ;
la figure 4, décrite précédemment, est une vue de dessus d'un assemblage bout-à-bout de barres de seuil au moyen du goupillon de la figure 3 ;
la figure 5 est une vue de dessous d'un mode de réalisation d'un élément d'assemblage bout-à-bout de barres de seuil à glissière ou éléments de bordure similaires ;
la figure 6 est une vue en coupe transversale de l'élément d'assemblage de la figure 5 ;
la figure 7 est une vue de dessus de l'élément d'assemblage des figures 5 et 6 ;
la figure 8 est une vue de dessus en perspective d'un mode de réalisation d'élément d'assemblage en situation dans une barre de seuil à glissière ;
la figure 9 est une vue de dessous en perspective de l'élément d'assemblage et de la barre de seuil de la figure 9 ; et
la figure 10 est une vue schématique de dessus d'un assemblage réalisé.

### Description détaillée

De mêmes éléments ont été désignés par de mêmes références aux différentes figures qui ont été tracées sans respect d'échelle. Par souci de clarté, seul les éléments utiles à la compréhension de l'invention ont été représentés et seront décrits. En particulier, la fabrication des éléments de bordure à glissière auxquels s'applique plus particulièrement la présente invention n'a pas été détaillée, l'invention étant compatible avec les éléments de bordure à glissière usuels. De plus, l'invention sera décrite par la suite en relation avec un exemple d'application aux barres de seuil à glissière mais les modes de réalisation d'élément d'assemblage qui vont être décrits s'appliquent plus généralement à tout élément de bordure à glissière, qu'il s'agisse d'éléments de bordure de revêtement de sol ou de mur.

On utilisera par la suite les termes d'orientation et de position "dessus", "dessous", "inférieure", supérieure", etc. en se référant arbitrairement à des barres de seuil en position d'utilisation sur un sol.

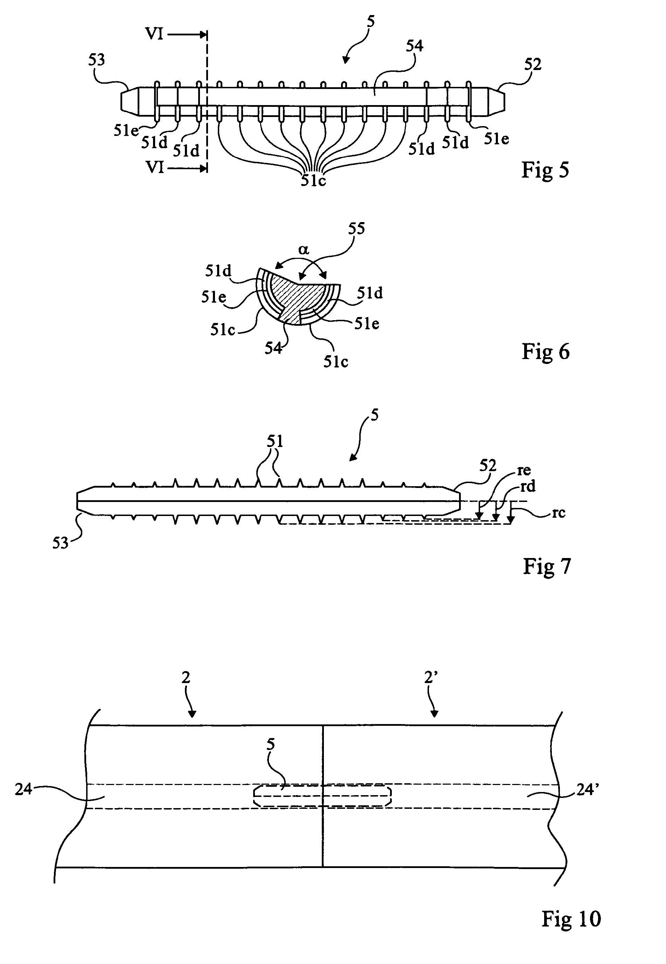

La figure 5 est une vue de dessous d'un élément 5 d'assemblage selon un mode de réalisation préféré de la présente invention.

La figure 6 est une vue en coupe selon la ligne VI-VI d'un mode de réalisation préféré de l'élément d'assemblage 5.

La figure 7 est une vue de dessus d'un mode de réalisation préféré de l'élément d'assemblage 5.

L'élément d'assemblage 5 a une forme générale en portion de cylindre formant une portion de cheville allongée. En section, la portion de cylindre couvre entre 190 et 270 degrés. L'angle (α figure 6) d'ouverture de la portion de cylindre est, de préférence, choisi en fonction de l'angle formé par la pointe (25, figure 1) de la paroi interne de la glissière de la barre de seuil à laquelle est destiné l'élément d'assemblage, de façon à empêcher une rotation de la glissière par rapport à l'élément d'assemblage.

De préférence, le diamètre dans lequel s'inscrit l'élément 5 à ses extrémités longitudinales 52 et 53 est inférieur au diamètre dans lequel il s'inscrit dans sa partie médiane de façon à faciliter son introduction dans les glissières des barres de seuil à assembler.

Dans la longueur, l'élément 5 comporte des ailettes 51, de préférence parallèles entre elles et formant des godrons saillants en tronçons de cercle, perpendiculaires à l'axe de l'élément 5. De préférence, toutes les ailettes 51 ne s'inscrivent pas dans le même diamètre. Le diamètre dans lequel s'inscrivent des ailettes 51e proches des extrémités 52 et 53 est inférieur à celui dans lequel s'inscrivent des ailettes 51c de la partie centrale de l'élément. Dans le mode de réalisation illustré par les figures 5 à 7, de part et d'autre de l'élément 5, deux ailettes 51d s'inscrivent dans un diamètre (illustré par un rayon rd en figure 7) intermédiaire entre ceux (illustrés par des rayons re et rc) des ailettes 51e et 51c. De préférence, les ailettes ont une forme biseautée vers le milieu de l'élément d'assemblage. Ainsi, l'introduction dans les glissières est encore facilitée. De plus, l'orientation de la déformation des ailettes qui en résulte améliore la tenue de l'assemblage en créant un effet de crampon anti-retour dans les glissières des barres de seuil.

En partie inférieure (figure 5), l'élément 5 comporte de préférence une portion allongée selon le plus grand diamètre dans lequel il s'inscrit. Cette portion définit un rail longitudinal 54 saillant du diamètre interne (entre ailettes).

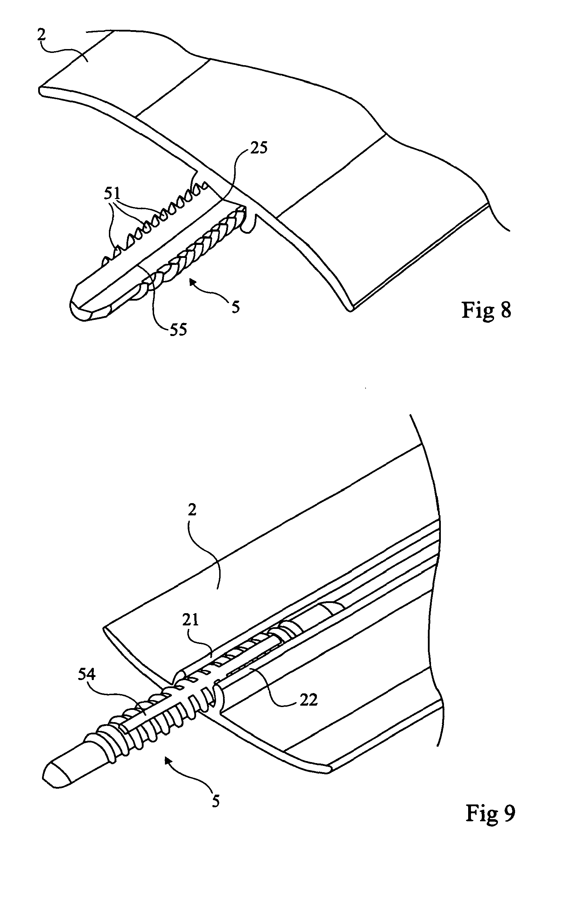

La figure 8 est une vue partielle en perspective de dessus d'une barre de seuil 2 à glissière et d'un élément d'assemblage 5 en situation.

La figure 9 est une vue partielle en perspective de dessous de la glissière 2 et de l'élément d'assemblage 5.

La section en forme de V 55, définie dans la partie supérieure de l'élément 5, coopère avec la forme en V 25 de la partie inférieure 23 de la glissière 24. Cette forme constitue en quelque sorte un détrompeur pour l'engagement de l'élément 5, interdisant ainsi son introduction dans le mauvais sens. De préférence (figure 8), les formes en V sont à formes contraires. Ainsi, la gorge 55 évite toute rotation de l'élément d'assemblage et garantit que les deux barres de seuil sont alignées une fois assemblées. Les longueurs de barre de seuil à monter sont pré-assemblées les unes aux autres au moyen d'éléments d'assemblage 5 avant d'être fixé au sol.

Le rail 54, défini en partie inférieure de l'élément 5 (figure 9), coopère avec les extrémités des nervures 21 et 22 de la glissière 24 et participe au guidage tout en conférant une résistance mécanique améliorée contre la torsion.

Les ailettes 51 participent au blocage de l'élément 5, tout en autorisant une légère variation de diamètre facilitant l'introduction.

Dans le mode de réalisation préféré d'ailettes de diamètres croissants depuis les extrémités jusqu'au centre de l'élément 5, l'introduction de l'élément est facilitée tout en assurant une tenue optimale par les ailettes de la partie centrale. De plus, cela permet de rendre plus symétrique la répartition de l'élément 5 dans les deux barres de seuil assemblées grâce à la résistance graduelle à l'enfoncement. Le nombre et la distribution des diamètres des différentes ailettes dépend de la longueur de l'élément, du nombre d'ailettes prévu, et pourra être adapté en fonction des applications.

La figure 10 est une vue de dessus de deux extrémités de barre de seuil 2 et 2' assemblées au moyen d'un élément 5. Comme l'illustre cette figure, l'élément 5 améliore l'assemblage en permettant que les deux bords bout-à-bout des barres de seuil soient bien accolés. De plus, la répartition de l'élément 5 entre les deux glissières 24 et 24' est améliorée.

Le recours à une pièce plastique comportant des ailettes légèrement déformables autorise une éventuelle compensation d'un désalignement des trous dans le sol. Dans le cas où les barres sont fixées par des clous-chevilles en plastique (figure 2), la synergie des ailettes des clous-chevilles avec les ailettes de l'élément d'assemblage optimise l'ajustement en position des barres de seuil.

Le fait de réaliser un élément d'assemblage 5 en matière plastique présente un avantage induit dans la fabrication des pièces de montage et accessoires des barres de seuil. En effet, l'élément d'assemblage 5 peut être injecté en même temps que les autres pièces, notamment les clous-chevilles en plastique.

Les dimensions (longueur, angle de la gorge 55, angle du rail 54, diamètre des extrémités de l'élément 5, diamètre interne (entre ailettes), diamètre des ailettes, etc.) pourront varier selon les applications et notamment selon la forme et les dimensions des glissières auxquelles est destiné l'élément d'assemblage.

Par rapport aux éléments d'assemblage connus, la fonction de la gorge en V n'est pas de déformer l'élément d'assemblage (l'introduction de celui-ci étant facilitée par les ailettes), mais de s'adapter à la forme du profilé à assembler.

A titre d'exemple particulier de réalisation, un élément d'assemblage 5 présente une longueur comprise entre 3 et 8 centimètres, un diamètre interne compris entre environ 2 et 7 millimètres, un diamètre externe (au niveau des ailettes 51c de plus grand diamètre) compris entre 4 et 10 millimètres. L'intervalle de diamètre entre les différentes ailettes 51 est compris entre 0,1 et 0,5 millimètre en fonction du diamètre de l'élément d'assemblage. L'intervalle dans la longueur entre deux ailettes 51 est compris entre 2 et 7 millimètres. Plus cet écart est important, plus l'introduction est facilitée. Plus cet écart est faible, meilleure est la tenue.

Divers modes de réalisation ont été décrits, diverses variantes et modifications apparaîtront à l'homme de l'art. En particulier, les différentes caractéristiques présentées comme préférentielles pourront être combinées en totalité ou en partie.

## Revendications

1. Elément en matière plastique (5) d'assemblage bout-à-bout d'éléments de bordure (2, 2') de revêtement de sol ou de mur, ayant une forme allongée s'inscrivant dans une portion de cylindre, comportant des ailettes externes (51), et **caractérisé en ce que** l'élément définit, en section, une gorge en V ouverte (55) sur un angle compris entre 90 et 170 degrés.

2. Elément d'assemblage selon la revendication 1, dans lequel la gorge (55) est adaptée à une forme en V saillante (25) d'une paroi interne des éléments de bordure (2, 2') à assembler.

3. Elément d'assemblage selon la revendication 1 ou 2, définissant, en section à l'opposé de la gorge, un rail longitudinal (54) saillant.

4. Elément d'assemblage selon la revendication 3, dans lequel ledit rail est adapté à coopérer avec une ouverture définie par des nervures (21, 22) délimitant des glissières (24, 24') des éléments de bordure (2, 2').

5. Elément d'assemblage selon l'une quelconque des revendications 1 à 4, dans lequel le diamètre dans lequel s'inscrivent lesdites ailettes (51) est plus grand en partie centrale de l'élément (5) qu'au voisinage de ses extrémités (52, 53).

6. Elément d'assemblage selon l'une quelconque des revendications 1 à 5, dans lequel lesdites ailettes ont une forme biseautée vers le milieu de l'élément d'assemblage.

7. Elément d'assemblage selon l'une quelconque des revendications 1 à 6, dont les extrémités (52, 53) s'inscrivent dans un diamètre inférieur à celui de la partie centrale.

8. Ensemble d'au moins deux éléments de bordure (2, 2') à glissières (24, 24') mises bout-à-bout, comportant un élément d'assemblage (5) conforme à l'une quelconque des revendications 1 à 7.

## Patentansprüche

1. Element aus einem Kunststoffmaterial (5) zum stumpfen Zusammenbauen von Einfassungselementen (2, 2') für einen Fußbodenbelag oder für eine Wand, wobei es eine längliche Form hat, die in einen Zylinderausschnitt eingebettet ist, und äußere Rippen (51) umfasst und wobei es **dadurch gekennzeichnet ist, dass** das Element im Querschnitt eine Auskehlung in offener V-Form (55) definiert, und dies mit einem Winkel, der zwischen 90 und 170 Grad liegt.

2. Element zum Zusammenbauen nach Anspruch 1, bei dem die Auskehlung (55) für eine hervorstehende V-Form (25) einer Innenwand der zusammenzubauenden Einfassungselemente (2, 2') angepasst ist.

3. Element zum Zusammenbauen nach Anspruch 1 oder 2, das im Querschnitt auf der entgegengesetzten Seite zur Auskehlung eine hervorstehende Längsschiene (54) definiert.

4. Element zum Zusammenbauen nach Anspruch 3, bei dem die Schiene dafür eingerichtet ist, mit einer Öffnung zusammenzuarbeiten, die durch Rippen (21, 22) definiert wird, die Gleitschienen (24, 24') der Einfassungselemente (2, 2') abgrenzen.

5. Element zum Zusammenbauen nach einem der Ansprüche 1 bis 4, bei dem der Durchmesser, in den die Rippen (51) eingebettet sind, im mittleren Teil des Elements (5) größer ist als in der Nähe seiner Enden (52, 53).

6. Element zum Zusammenbauen nach einem der Ansprüche 1 bis 5, bei dem die Rippen eine zur Mitte des Elements zum Zusammenbauen hin abgeschrägte Form haben.

7. Element zum Zusammenbauen nach einem der Ansprüche 1 bis 6, bei dem die Enden (52, 53) in einen Durchmesser eingebettet sind, der kleiner ist als derjenige im mittleren Teil.

8. Einheit aus wenigstens zwei Einfassungselementen (2, 2') mit Gleitschienen (24, 24'), die stumpf zusammengesetzt sind, wobei sie ein Element zum Zusammenbauen (5) nach einem der Ansprüche 1 bis 7 umfasst.

## Claims

1. Plastic element (5) for connecting end-to-end edge elements (2, 2') of the floor covering or wall covering, having an elongated shape which is inscribed in a portion of a cylinder, comprising external fins (51), and **characterised in that** the element defines, in section, a V-shaped groove open (55) at an angle between 90 and 170 degrees.

2. Connecting element according to claim 1, wherein the groove (55) is adapted to a V-shape projection (25) of an inner wall of the edge parts (2, 2') to be assembled.

3. Connecting element according to claim 1 or 2, defining, in the opposite section of the groove, a projecting longitudinal rail (54).

4. Connecting element according to claim 3, wherein said rail is adapted to cooperate with an opening defined by ribs (21, 22) delimiting the slideways (24, 24') of the edge (2, 2').

5. Connecting element according to any one of claims 1 to 4, wherein the diameter within which said fins (51) is inscribed is larger in the central portion of the element (5) than in the vicinity of its ends (52, 53).

6. Connecting element according to any one of claims 1 to 5, wherein said fins have a tapered shape towards the middle of the connecting element.

7. Connecting element according to any one of claims 1 to 6, of which the ends (52, 53) are inscribed in a smaller diameter than that of the central portion.

8. Set of at least two edge parts (2, 2') with slideways (24, 24') placed end-to-end, having a connecting element (5) according to any one of claims 1 to 7.
